# EUROPEAN PATENT SPECIFICATION

(11) **EP 1 034 944 B1**
(45) Date of publication and mention of the grant of the patent: **26.05.2004**
(21) Application number: 00104455.1
(22) Date of filing: 06.03.2000
(51) Int. Cl.: B60B 30/02, G01M 1/04

(54) **Lifting unit for vehicle wheels and method for using the same**
Hebevorrichtung für Fahrzeugräder und Verfahren zu deren Verwendung
Appareil de levage de roues de vehicules et procédé pour son utilisation

(30) Priority: 10.03.1999 IT MO990041
(43) Date of publication of application: 13.09.2000
(73) Proprietor: FEMAS S.r.l., 42015 Correggio (reggio Emilia) (IT)
(72) Inventor: Ferrari, Gino, 42015 Correggio, (Prov. Reggio Emilia) (IT); Maioli, Franco, 42015 Correggio, (Prov. Reggio Emilia) (IT)
(74) Representative: Luppi, Luigi

(56) References cited:
- EP-A- 0 848 238
- DE-A- 4 125 809
- DE-A- 19 741 751
- US-A- 5 244 331

## Description

The present invention relates to a lifting unit for vehicle wheels and to a method of using the same.

During the mounting and removal of tires onto and from wheels and during an ensuing balancing operation, workers in this filed are repeatedly required to lift and lower considerably heavy wheels of different sizes and types.

In particular, the most energy-consuming operations are the removal of a tire-fitted wheel from ,the platform of a tire changing machine, transfer of the wheel onto the flanged shaft of a balancing machine, and its subsequent transfer to the vehicle hub for refitting.

Such an operation, repeated on average four times for each vehicle, adds up to a considerable effort over a working day.

Statutory provisions concerning workplace conditions have also acknowledged this problem and set a limit to the maximum weight that each operator is required to lift in performing the above operations.

In order to comply with these statutory provisions and also in view of the requirement of lightening physical work the operators have to endure different kinds of wheel lifting unit have been devised which, by replacing the operator in lifting or transferring the wheels among the various machines, allow to reduce considerably the overall human energy expenditure.

These conventional lifting units essentially comprise a base chassis which is optionally provided with wheels for moving on the ground and supports a turret along which two cantilevered arms slide so as to converge towards or diverge away from, one another. The arms are actuated in various ways and provided with clamping elements suitable for picking up a wheel from the ground, clamping it between the clamping elements, and positioning it on these machines.

The movements of the arms are such that, in one case, the wheel is either clamped and simultaneously centered so that its axis is aligned with respect to the hub of a balancing machine on which the wheel is to be fitted, or the wheel is first clamped and then centered on the balancing machine hub.

The lifting unit, when provided with wheels, can also be used for transferring and positioning the wheels with respect to the hubs of a vehicle onto which they are to be fitted.

DE-41 25 809-A discloses a lifting unit for positioning a vehicle wheel at a balancing machine measuring spindle where the longitudinal axis of the measuring spindle is in alignment with the axis of rotation of the vehicle wheel. The lifting unit has driving means controlled either by a capacitative or a ultrasonic or an infrared detecting means and is arranged both to lift/lower a vehicle wheel and to move it laterally onto and away from the spindle of the balancing machine.

US- 5 244 331 discloses a lifting unit for positioning a vehicle wheel at a measuring spindle of a balancing machine. The lifting unit is provided with a first and second equal length positioning arms having one end thereof pivoted about a horizontal pivot pin slidingly mounted so as to be displaceable along a line perpendicular to the measuring spindle, the other end of the first arm being pivoted to the lifting unit whereas the other end of the second arm is free to move toward and away from the vehicle wheel on the lifting unit when the latter is either raised or lower, respectively.

EP- 0 848 238-A, which comprises the features mentionned in the preamble of claim 1, discloses a lifting unit for positioning a vehicle wheel at a measuring spindle of a balancing machine.

The aim of the present invention is to solve the above-described problems of the prior art by providing a lifting unit for vehicle wheels and a method of using it which makes it possible to perform all most energy-demanding operations for lifting and transferring wheels to and from machines in a practically automatic way and thus minimizing any physical energy by operators.

This aim and other objects are achieved by a lifting unit for a vehicle wheel according to claim 1.

Advantageously, the method of using the unit for lifting vehicle wheels from a low-level supporting surface to levels at which working elements of machines are arranged, is characterized in that it comprises loading a wheel onto said lifting unit, detecting its diameter by means of a detector, and simultaneously arranging a limiter at a preset level, lifting said wheel to an elevated level, e.g. of a platform of a adjacently located tire changing machine, reloading said wheel onto said lifting unit, descending to an intermediate level which is defined by said limiter and coincides e.g. with a rotating shaft of a balancing machine arranged adjacent and opposite said tire changing machine and depositing the wheel onto the low-level supporting surface.

Further features and advantages will become better apparent from the following detailed description of a preferred embodiment of a lifting unit for vehicle wheels, illustrated only by way of non-limitative example in the accompanying drawings, wherein:

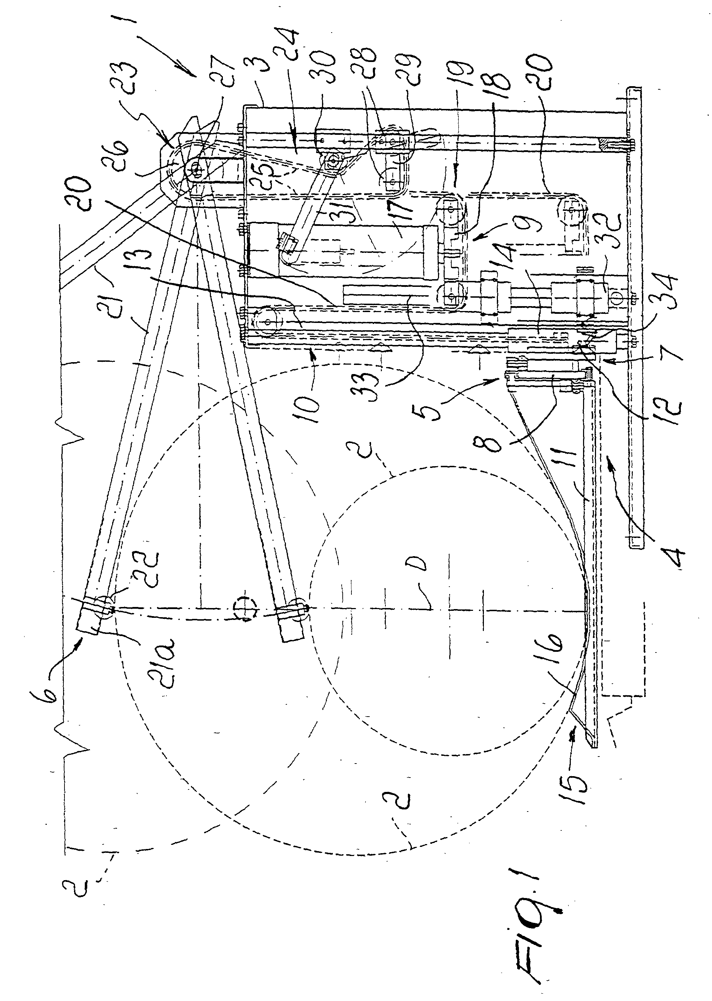

Figure 1 is a schematic side view of a lifting unit for vehicle wheels according to the invention;
Figure 2 is an enlarged-scale detail view thereof;
Figure 3 is a detail view of a limiter;
Figure 4 is a schematic top view of the lifting unit according to the invention.

With reference to the above Figures, 1 designates a lifting unit for vehicle wheels 2, which is constituted by a chassis 3 which supports lifting 4 with two degrees of freedom for lifting the wheels 2, and transfer means 5 for horizontally transferring the wheels towards or away from machines (not shown for simplicity).

The lifting means 4, described in greater detail hereinafter, are controlled by a detector or sensor 6 for detecting the diameter "D" of the wheels 2, which cooperates with a limiting element 7 for limiting the vertical stroke of the lifting means 4.

The means 4 for lifting the wheels 2 and the means 5 for moving them horizontally are constituted by a horizontal cross-member 8 which can be moved vertically parallel to itself, is actuated by driving or actuation elements 9 and guided on means 10 which are rigidly coupled to the chassis 3.

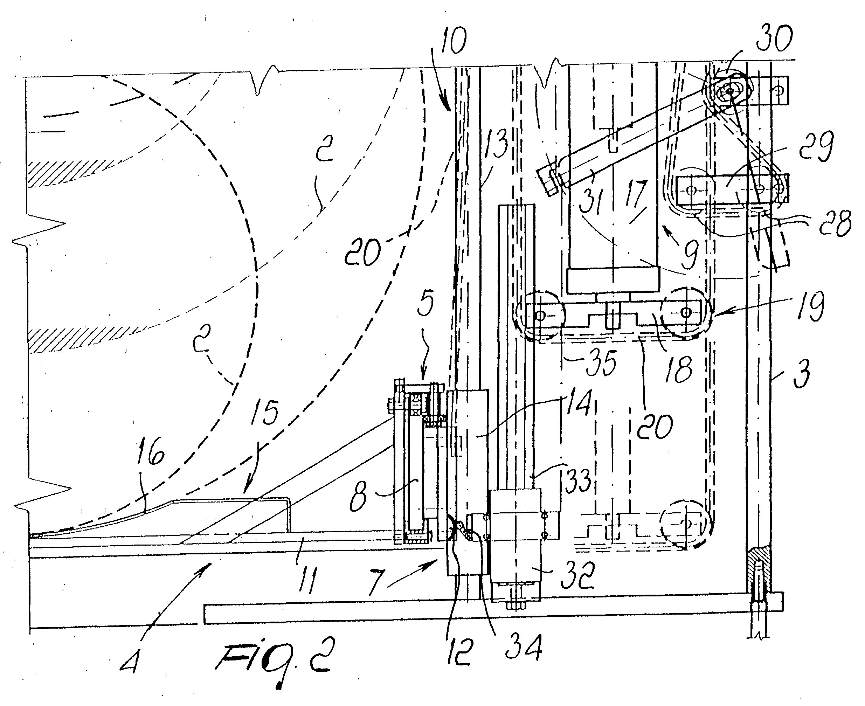

A bracket 11 for supporting the wheels 2 is fitted on a front face of the cross-member 8 so that it can slide freely horizontally, e.g. by pushing. An eccentric body 12 (Fig.2) which can be engaged by the limiting element 7 is fitted on the rear face of the cross member 8.

The means 10 for guiding the cross-member 8 are constituted by two vertical and parallel columns on which respective sleeves 14, rigidly coupled to the rear face of the cross-member 8, are slidingly engaged.

The bracket 11 has, on its supporting surface, a retaining means 15 for the wheels 2 which is constituted by an inserted member 16 which is rigidly coupled to the surface thereof and is cradle-shaped.

The actuation elements 9 for causing the vertical movement of the cross-member 8 are constituted by at least one fluid-operated cylinder 17, which is located between a vertically moving carriage 18 and the supporting chassis 3. The carriage 18 is provided with guiding elements 19 for at least one first chain or toothed belt 20, one end of which is coupled to the chassis 3 while its other end is coupled to the cross-member 8.

Sensor means 6 for detecting the diameters "D" of the wheels 2 is constituted by an overhanging arm 21 which extends above the lifting means 4 for lifting the wheels 2 and the transfer means 5 for transferring them horizontally . Arm 21 is articulated to the chassis 3 so that it can rotate in a vertical plane, and supports at its free end 21 a a feeler 22 designed to contact the tread of the tire of a wheel 2. Arm 21 is further provided, at its opposite articulation end, with detecting means 23 for detecting angles of rotation between a reference position, e.g. a vertical "zero" position, and a position in which feeler 22 is in contact with the wheel tread. The control or detection means 23 is connected, through transmission elements 24 and with preset transmission ratios, to the limiting element 7 designed to limit the vertical stroke of the lifting means 4.

The transmission means 24 are constituted by a second chain or toothed belt 25 which is wound in a loop on a sprocket 26 which is keyed coaxially on an articulation pivot 27 of the arm 21 and on two guiding idler sprockets 28 which are mounted so that they can rotate freely on a bracket 29 which is rigidly coupled to the chassis 3.

A further sprocket 30 is mounted for rotation and engages with an intermediate portion of a length of the second section 25 of chain or toothed belt and fitted so as to rotate at the end of a lifting arm 31 which in turn is articulated to the chassis 3 and can rotate on a vertical plane. The opposite end of the arm 31 is connected to the limiting element 7 arranged to limit the vertical stroke of the lifting means 4.

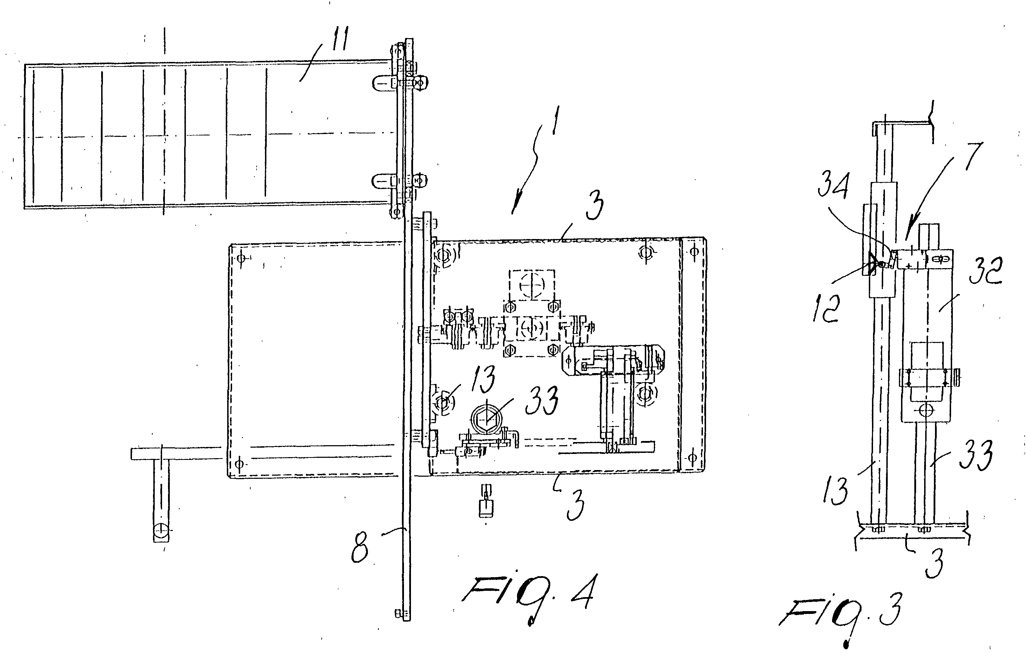

The limiting element 7 is constituted (Fig.3) by a slider 32 which is fitted so that it can slide vertically on a guide 33 which has a polygonal cross-section and supports, on one side thereof directed towards the cross-member 8, a switch 34 for contact with the eccentric element 12.

According to an embodiment of the lifting unit 1, the transmission means 24 can be constituted by an electronic element for detecting angular movements, e.g. an encoder, which is arranged on the articulation end of the arm 21 and controls a fluid-driven actuator for moving the limiting element 7 vertically.

The operation of the lifting unit according to the invention is as follows: the lifting unit 1 is preferably arranged between two conventional machines , e.g. a tire changing machine and a wheel balancing machine.

An operator then places a wheel 2 vertically on the bracket 11, which has been brought to ground level; the wheel is retained on the bracket by the cradle-shaped inserted member 16.

The operator grasps the arm 21 and moves it into contact with the top of the wheel 2. The rotation of the arm also cause, by means of chain 25 wound around the sprocket 26 and engaged on the sprocket 30, the arm 31, to be angularly displaced . The free end of arm 31 is connected, e.g. by means of an additional chain designated by a dotted line 35 in the drawings, to the slider 32, thus causing it to slide upwards along the guide 33.

It should be noted that the transmission ratio between the sprockets 26 and 30 is such that the angular displacement of the arm 21 is twice the that of the arm 31.

By means of a command, the operator activates the fluid-driven cylinder 17, which by being extended pushes the carriage 18 downwards, which by contrast causes the bracket 11, on which wheel 2 is loaded to be lifted until it reaches the higher level at which a rotating platform of a tire changing machine is arranged.

The operator then moves the bracket 11 and thus the wheel 2 horizontally on the cross-member 8 , without therefore having to lift the wheel, up to the changing machine platform, on which conventional operations of removing and refitting a tire on the wheel are performed.

After these operations have been completed, the operator arranges the wheel 2 vertically on the bracket 11 and again activates the fluid-operated cylinder 17, which is caused to be contracted so as to draw towards it the carriage 18, ultimately causing the bracket 11 to descend to ground level until the eccentric body 12 engages with the switch 34 supported by the slider 32, arranged earlier at a level corresponding to the diameter of the wheel 2.

Downward movement is thus stopped at a level at which wheel 2 has its wheel 2 arranged so that its center is aligned with the rotating shaft of the balancing machine.

The operator pushes bracket 11 causing it to slide along cross-member 8 and inserts the wheel 2 onto the rotating shaft of a balancing machine for balancing the wheel in conventional manner.

Once the operation is completed, the wheel 2 is removed from the rotating shaft and returned to the bracket 11, which is then returned to ground level and unloaded.

The invention thus conceived is susceptible of numerous modifications and variations within the scope as defined by the claims.

Where technical features mentioned in any claim are followed by reference numerals, such reference numerals have the sole purpose of increasing the intelligibility of the claims and shall not be construed as limiting the scope of the claim.

## Claims

1. A lifting unit for a vehicle wheel designed to cooperate with a tire changing machine and a balancing machine arranged on opposite sides thereof and located at a respective operating level, said lifting unit having
- a support frame or chassis (3) and guide means (10) vertically extending from said frame member (3);
the lifting unit comprising a cross-member (8) slidingly mounted on said guide means (10) and arranged to be moved up and down thereon,
- driving means (9) carried by said support frame (3) and arranged to move said cross-member (8) on said guide means (10),
- a bracket means (11) horizontally slidingly supported by said cross-member (8) and designed to carry a wheel (2) to be lifted / lowered, **characterized in that** it comprises:
- a limiting means (7) slidably carried on a vertical guide means ( 33) in turn supported by said supporting frame (3) said limiting means (7) being arranged to limite the vertical stroke of the cross member (8),
- sensor means (6) carried by said frame (3) and arranged to detect the diameter of a wheel (2) standing on said bracket means (11), and
- detection means ( 23) arranged to position said limiting means (7) depending upon the diameter of said vehicle wheel (2) as detected by said sensor means (6).

2. A lifting unit according to claim 1, **characterized in that** said guide means (10) is coupled to said chassis (3), **in that** said bracket means (11) is mounted on a front face of said cross-member (8) so that it can freely slide in a horizontal direction and **in that** an eccentric body (12) is arranged on the opposite rear face of said cross-member (8) and designed to be detected by said limiting element ( 7).

3. A lifting unit according to claim 2, **characterized in that** said guide means (10) comprises two vertical columns (10) parallel to one another and a respective sliding sleeve (14) rigidly coupled to said cross-member (8).

4. A lifting unit according to claim 2, **characterized in that** said bracket means (11) has wheel retaining means (15) on its upper supporting surface.

5. A lifting unit according to claim 4, **characterized in that** said wheel retaining means (15) comprises an inserted member (16) which is rigidly coupled to said supporting surface and is cradle- shaped.

6. A lifting unit according to claim 2, **characterized in that** said actuator elements (9) arranged to actuate said cross-member (8) comprise at least one fluid-operated cylinder (17) located between a vertically moving carriage (18) and said chassis (3), said carriage (18) being provided with guiding elements (19) for at least one first chain or toothed belt (20), one end of which is rigidly coupled to the chassis (3) and its other end is rigidly coupled to said cross-member (8).

7. A lifting unit according to claim 2, **characterized in that** said sensor means (6) for detecting the diameters of wheels (2) comprises an overhanging arm (21) which lies above said cross-member (8) and is articulated to said chassis (3) to be angularly displaceable in a vertical plane, said arm (21) having at its free end (21a) a tire tread feeler (22) and co-operating at its other end articulated to an articulation pivot (27) with said detection means (23) for detecting the angles of rotation of arm (21) between a reference position and a contact position with the tread of a wheel (2), said detection means (23) being connected through motion transmission means (24) with preset transmission ratio to said limiting means (7) arranged to limit the vertical stroke of said cross-member (8).

8. A lifting unit according to claim 7, **characterized in that** said motion transmission means (24) comprises a second chain/toothed belt (25) which is closed in a loop around a sprocket (26) coaxially keyed on said articulation pivot (27) of said arm (21), around two guiding idler sprockets (28) which are mounted for rotation on said chassis (3) and around a further rotating sprocket (30) which is secured to one end of lifting arm (31) so as to be rigid in rotation therewith, said lifting arm (31) being articulated to said chassis (3) so as to be angularly displaceable on a vertical plane, the other end of said lifting arm (31) being connected to said limiting means (7) for limiting the vertical stroke of said cross-member (8).

9. A lifting unit according to any preceding claim 2 to 8, **characterized in that** said limiting means (7) comprises a slider ( 32) arranged to slide vertically on a guide (33) having a polygonal cross-section and supporting on its side directed towards said cross-member (8), a switch (34) arranged to contact said eccentric body (12) fitted on the rear face of said cross-member (8).

10. A lifting unit according to any claim 7 to 9, **characterized in that** said motion transmission means (24) comprises an electronic element for detecting angular movements which is arranged on said articulated end of said arm (21) and controls a fluid-operated actuation assembly for vertically moving said limiting means ( 7).

11. A lifting unit according any claim 7 to 10, **characterized in that** said transmission ratio between said detection means (23) for detecting angles of rotation of said arm (21) and the stroke of said limiting mans (7) is 2:1.

12. A method of lifting vehicle wheels with a lifting unit according to any preceding claim 1 to 11 from a low-level supporting surface to levels at which working elements of machines are arranged, **characterized in that** it comprises loading a wheel onto said lifting unit, detecting its diameter by means of a detector, and simultaneously arranging a limiter at a preset level, lifting said wheel to an elevated level, e.g. of a platform of a adjacently located tire changing machine, reloading said wheel onto said lifting unit, descending to an intermediate level which is defined by said limiter and coincides, e.g. with a rotating shaft of a balancing machine arranged adjacent and opposite said tire changing machine and depositing the wheel onto the low-level supporting surface.

13. A method according to claim 12, **characterized in that** said intermediate level is the level at which the center of the wheel is aligned with said axis of rotation of a balancing machine.

## Patentansprüche

1. Hebeeinheit für ein Fahrzeugrad, die so ausgestaltet ist, dass sie mit einer Reifenwechselmaschine und einer Auswuchtmaschine zusammenwirken kann, die auf gegenüberliegenden Seiten derselben angeordnet und auf einer jeweiligen Arbeitshöhe gelegen sind, wobei die Hebeeinheit aufweist:
- einen Tragrahmen oder ein Chassis (3)
und Führungsmittel (10), die sich vertikal von dem Rahmenelement (3) aus erstrecken; wobei die Hebeeinheit einen Querträger (8) aufweist, der verschiebbar an den Führungsmitteln (10) angebracht und so angeordnet ist, dass er daran aufwärts und abwärts bewegt werden kann,
- Antriebsmittel (9), die von dem Tragrahmen (3) getragen sind und so angeordnet sind, dass sie den Querträger (8) an den Führungsmitteln (10) bewegen können,
- horizontal verschiebbare Stützmittel (11), die von dem Querträger (8) gehalten werden und dazu ausgestaltet sind, ein anzuhebendes/abzusenkendes Rad (2) zu tragen, **dadurch gekennzeichnet, dass** sie aufweist:
- Begrenzungsmittel (7), die verschiebbar auf vertikalen Führungsmitteln (33) getragen sind, die wiederum von dem Tragrahmen (3) gehalten sind, wobei die Begrenzungsmittel (7) so angeordnet sind, dass sie den vertikalen Hub des Querträgers (8) begrenzen,
- Sensormittel (6), die von dem Rahmen (3) getragen sind und so angeordnet sind, dass sie den Durchmesser eines Rades (2) detektieren, das auf den Stützmitteln (11) steht, und
- Detektionsmittel (23), die so angeordnet sind, dass sie die Begrenzungsmittel (7) in Abhängigkeit des Durchmessers des Fahrzeugrades (2), wie er von den Sensormitteln (6) detektiert wird, positionieren.

2. Hebeeinheit nach Anspruch 1, **dadurch gekennzeichnet, dass** die Führungsmittel (10) an das Chassis (3) gekoppelt, dass die Stützmittel (11) an einer Vorderseite des Querträgers (8) angebracht sind, so dass sie in horizontaler Richtung frei verschiebbar sind, und dass ein exzentrischer Körper (12) auf der gegenüberliegenden Rückseite des Querträgers (8) angeordnet und so ausgestaltet ist, dass er von dem Begrenzungselement (7) detektiert werden kann.

3. Hebeeinheit nach Anspruch 2, **dadurch gekennzeichnet, dass** die Führungsmittel (10) zwei zueinander parallele vertikale Säulen (10) und eine entsprechende Schiebehülse (14) aufweisen, die starr mit dem Querträger (8) gekoppelt ist.

4. Hebeeinheit nach Anspruch 2, **dadurch gekennzeichnet, dass** die Stützmittel (11) Radhaltemittel (15) auf ihrer oberen Tragoberfläche aufweisen.

5. Hebeeinheit nach Anspruch 4, **dadurch gekennzeichnet, dass** die Radhaltemittel (15) ein eingesetztes Element (16) aufweisen, das starr mit der Tragoberfläche gekoppelt und wiegenförmig ausgebildet ist.

6. Hebeeinheit nach Anspruch 2, **dadurch gekennzeichnet, dass** die Betätigungselemente (9), die so angeordnet sind, dass sie den Querträger (8) betätigen können, zumindest einen fluidbetätigten Zylinder (17) aufweisen, der zwischen einem sich vertikal bewegenden Wagen (18) und dem Chassis (3) gelegen ist, wobei der Wagen (18) mit Führungselementen (19) für zumindest eine erste Kette oder Zahnriemen (20) versehen ist, von der/dem ein Ende starr an das Chassis (3) und das andere Ende starr an den Querträger (8) gekoppelt ist.

7. Hebeeinheit nach Anspruch 2, **dadurch gekennzeichnet, dass** die Sensormittel (6) zum Detektieren der Durchmesser der Räder (2) einen überhängenden Arm (21) aufweisen, der über dem Querträger (8) liegt und an das Chassis (3) angelenkt ist, so dass er in einer vertikalen Ebene winkelverstellbar ist, wobei der Arm (21) an seinem freien Ende (21a) einen Reifenlaufflächenfühler (22) aufweist und mit seinem anderen Ende, das an einen Gelenkzapfen (27) angelenkt ist, mit den Detektionsmitteln (23) zum Detektieren der Drehwinkel des Arms (21) zwischen einer Referenzposition und einer Position der Berührung mit der Lauffläche eines Rades (2) zusammenwirkt, wobei die Detektionsmittel (23) durch Bewegungsübertragungsmittel (24) mit voreingestelltem Übertragungsverhältnis mit den Begrenzungsmitteln (7) verbunden sind, die so angeordnet sind, dass sie den vertikalen Hub des Querträgers (8) begrenzen können.

8. Hebeeinheit nach Anspruch 7, **dadurch gekennzeichnet, dass** die Bewegungsübertragungsmittel (24) eine zweite Kette/Zahnriemen (25) aufweisen, die/der in einer Schleife um eine Laufrolle (26), die koaxial auf dem Gelenkzapfen (27) des Arms (21) verriegelt ist, um zwei Führungsleitrollen (28), die drehbar an dem Chassis (3) angebracht sind, und um eine weitere Laufrolle (30) geschlossen ist, die an einem Ende des Hebearms (31) befestigt ist, so dass sie mit diesem drehfest verbunden ist, wobei der Hebearm (31) an das Chassis (3) so angelenkt ist, dass es in einer vertikalen Ebene winkelverstellbar ist, wobei das andere Ende des Hebearms (31) mit den Begrenzungsmitteln (7) zum Begrenzen des vertikalen Hubs des Querträgers (8) verbunden ist.

9. Hebeeinheit nach einem der vorhergehenden Ansprüche 2 bis 8, **dadurch gekennzeichnet, dass** die Begrenzungsmittel (7) einen Schieber (32) aufweisen, der so angeordnet ist, dass er vertikal auf einer Führung (33) verschiebbar ist, die einen mehreckigen Querschnitt aufweist und auf ihrer dem Querträger (8) zugewandten Seite einen Schalter (34) trägt, der so angeordnet ist, dass er den exzentrischen Körper (12) berührt, der auf der Rückseite des Querträgers (8) angebracht ist.

10. Hebeeinheit nach einem der Ansprüche 7 bis 9, **dadurch gekennzeichnet, dass** die Bewegungsübertragungsmittel (24) ein elektronisches Element zum Detektieren von Winkelbewegungen aufweisen, das an dem gelenkig angebrachten Ende des Arms (21) angeordnet ist und eine fluidbetriebene Betätigungsanordnung zum vertikalen Bewegen der Begrenzungsmittel (7) steuert.

11. Hebeeinheit nach einem der Ansprüche 7 bis 10, **dadurch gekennzeichnet, dass** das Übertragungsverhältnis zwischen den Detektionsmitteln (23) zum Detektieren von Drehwinkeln des Arms (21) und dem Hub der Begrenzungsmittel (7) 2:1 ist.

12. Verfahren zum Heben von Fahrzeugrädern mit einer Hebeeinheit nach einem der vorhergehenden Ansprüche 1 bis 11 von einer Tragoberfläche eines unteren Niveaus auf Niveaus, in denen Arbeitselemente von Maschinen angeordnet sind, **dadurch gekennzeichnet, dass** es umfasst: Aufladen eines Rades auf die Hebeeinheit, Detektieren seines Durchmessers mittels eines Detektors, und gleichzeitig Anordnen eines Begrenzers auf einem voreingestellten Niveau, Anheben des Rades auf ein erhöhtes Niveau, beispielsweise einer Plattform einer benachbart angeordneten Reifenwechselmaschine, erneutes Aufladen des Rades auf die Hebeeinheit, Absenken auf ein Zwischenniveau, das durch den Begrenzer definiert ist und beispielsweise mit einer Drehwelle einer Auswuchtmaschine zusammenfällt, die benachbart angeordnet und der Reifenwechselmaschine gegenüberliegend angeordnet ist, und Absetzen des Rades auf die Tragoberfläche des unteren Niveaus.

13. Verfahren nach Anspruch 12, **dadurch gekennzeichnet, dass** das Zwischenniveau das Niveau ist, bei dem der Mittelpunkt des Rades mit der Drehachse einer Auswuchtmaschine fluchtet.

## Revendications

1. Unité de levage pour une roue de véhicule, conçue pour coopérer avec une machine à changer les pneumatiques et avec une machine à équilibrer les roues disposées de part et d'autre de celle-ci et situées à un niveau d'utilisation respectif, ladite unité de levage ayant :
- un châssis ou cadre de support (3)
et des moyens de guidage (10) partant verticalement dudit cadre (3) ;
l'unité de levage comprenant une traverse (8) montée coulissante sur lesdits moyens de guidage (10) et prévue pour monter et descendre sur celle-ci,
- des moyens d'entraînement (9) portés par ledit cadre de support (3) et prévus pour déplacer ladite traverse (8) sur lesdits moyens de guidage (10),
- un moyen de console (11) coulissant horizontalement, supporté par ladite traverse (8) et conçu pour porter une roue (2) à lever/abaisser,
***caractérisée en ce qu***'elle comprend :
- un moyen de limitation (7) porté de manière coulissante sur un moyen de guidage vertical (33) à son tour supporté par ledit cadre de support (3), ledit moyen de limitation (7) étant prévu pour limiter le déplacement vertical de la traverse (8),
- des moyens de capteur (6) portés par ledit cadre (3) et prévus pour détecter le diamètre d'une roue (2) dressée sur ledit moyen de console (11 ), et
- des moyens de détection (23) prévus pour positionner ledit moyen de limitation (7) en fonction du diamètre de ladite roue (2) de véhicule tel que détecté par lesdits moyens de capteur (6).

2. Unité de levage selon la Revendication 1, ***caractérisée en ce que*** lesdits moyens de guidage (10) sont couplés audit châssis (3), ***en ce que*** ledit moyen de console (11) est monté sur une face avant de ladite traverse (8) de façon qu'il puisse coulisser librement dans une direction horizontale et ***en ce qu***'un corps excentrique (12) est prévu sur la face arrière opposée de ladite traverse (8) et est conçu pour être détecté par ledit élément de limitation (7).

3. Unité de levage selon la Revendication 2, ***caractérisée en ce que*** lesdits moyens de guidage (10) comprennent deux colonnes verticales (10) parallèles l'une à l'autre et un manchon coulissant respectif (14) couplé de manière rigide à ladite traverse.

4. Unité de levage selon la Revendication 2, ***caractérisée en ce que*** ledit moyen de console (11) possède des moyens (15) de retenue de la roue sur sa surface de support supérieure.

5. Unité de levage selon la Revendication 4, ***caractérisée en ce que*** lesdits moyens (15) de retenue de la roue comprennent un élément inséré (16) qui est couplé de manière rigide à ladite surface de support et adopte la forme d'un berceau.

6. Unité de levage selon la Revendication 2, ***caractérisée en ce que*** lesdits éléments actionneurs (9) prévus pour actionner ladite traverse (8) comprennent au moins un vérin (17) actionné par un fluide et situé entre un chariot mobile verticalement (18) et ledit châssis (3), ledit chariot (18) étant muni d'éléments de guidage (19) pour au moins une première chaîne/courroie dentée (20), dont une extrémité est couplée de manière rigide au châssis (3) et dont l'autre extrémité est couplée de manière rigide à ladite traverse (8).

7. Unité de levage selon la Revendication 2, ***caractérisée en ce que*** lesdits moyens de capteur (6) pour détecter les diamètres des roues (2) comprennent un bras (21) en surplomb qui repose au-dessus de ladite traverse (8) et est articulé audit châssis (3) de manière à être déplaçable angulairement dans un plan vertical, ledit bras (21) ayant à son extrémité libre (21a) un palpeur (22) de bande de roulement et coopérant à son autre extrémité articulée sur un pivot d'articulation (27) avec lesdits moyens de détection (23) pour détecter les angles de rotation du bras (21) entre une position de référence et une position de contact avec la bande de roulement d'une roue (2), lesdits moyens de détection (23) étant connectés, par l'intermédiaire de moyens (24) de transmission d'un déplacement avec un rapport de transmission prédéfini, audit moyen de limitation (7) prévu pour limiter la course verticale de ladite traverse (8).

8. Unité de levage selon la Revendication 7, ***caractérisée en ce que*** lesdits moyens (24) de transmission d'un déplacement comprennent une seconde chaîne/courroie dentée (25) qui est fermée en boucle autour d'une roue-pignon (26) solidaire coaxialement sur ledit pivot d'articulation (27) dudit bras (21), autour de deux roues-pignons intermédiaires de guidage (28) qui sont montées pour rotation sur ledit châssis (3) et autour d'une autre roue rotative (30) qui est fixée à une extrémité du bras de levage (31) afin d'être rigide en rotation avec celui-ci, ledit bras de levage (31) étant articulé audit châssis (3) de manière à être angulairement déplaçable sur un plan vertical, l'au-tre extrémité dudit bras de levage (31) étant connectée audit moyen de limitation (7) pour limiter la course verticale du moyen de la traverse (8).

9. Unité de levage selon l'une quelconque des Revendications 2 à 8 , ***caractérisée en ce que*** ledit moyen de limitation (7) comprend une coulisse (32) prévue pour coulisser verticalement sur un guide (33) ayant une section transversale polygonale et supportant sur son côté orienté vers ladite traverse (8), un commutateur (34) prévu pour entrer en contact avec ledit corps excentrique (12) fixé sur la face arrière de ladite traverse (8).

10. Unité de levage selon l'une quelconque des Revendications 7 à 9, ***caractérisée en ce que*** lesdits moyens (24) de transmission d'un déplacement comprennent un élément électronique pour détecter des mouvements angulaires qui est disposé sur ladite extrémité articulée dudit bras (21) et contrôle un ensemble d'actionnement actionné par un fluide afin de déplacer verticalement ledit moyen de limitation (7).

11. Unité de levage selon l'une quelconque des Revendication 7 à 10, ***caractérisée en ce que*** ledit rapport de transmission entre lesdits moyens de détection (23) pour détecter des angles de rotation dudit bras (21) et la course dudit moyen de limitation (7) est de 2/1.

12. Procédé de levage de roues de véhicule avec une unité de levage selon l'une quelconque des Revendications 1 à 11 d'une surface de support basse jusqu'à des niveaux auxquels sont installés des éléments actifs de machines, ***caractérisé en ce qu****'il* comprend le chargement d'une roue sur ladite unité de levage, la détection de son diamètre au moyen d'un détecteur, et le placement simultané d'un limiteur à un niveau présélectionné, le levage de ladite roue jusqu'à un niveau élevé, par exemple une plate-forme d'une machine à changer les pneumatiques située de manière adjacente, le rechargement de ladite roue sur ladite unité de levage, la descente jusqu'à un niveau intermédiaire qui est défini par ledit limiteur et coïncide par exemple avec un arbre rotatif d'une machine à équilibrer les roues située de manière adjacente et opposée à ladite machine à changer les pneumatiques, et la dépose de la roue sur la surface de support basse.

13. Procédé selon la Revendication 12, ***caractérisé en ce que*** ledit niveau intermédiaire est le niveau auquel le centre de la roue est aligné avec ledit axe de rotation d'une machine à équilibrer les roues.
